# EUROPEAN PATENT APPLICATION

(11) **EP 2 923 833 A1**
(43) Date of publication of application: **30.09.2015**
(21) Application number: 15160627.4
(22) Date of filing: 24.03.2015
(51) Int. Cl.: B32B 27/00, B29C 63/00, G02F 1/1333, H04M 1/02, G06F 1/00

(54) **An attaching method of a protective film. a positioning system for a protective film, a protective film complex and a fabrication method for a protective film**

(30) Priority: 26.03.2014 JP 2014064145
(71) Applicant: Buffalo Inc., Nagoya-shi, Aichi 460-8315 (JP)
(72) Inventor: Ozeki, Tsuyoshi, Nagoya-shi, Aichi 460-8315 (JP)
(74) Representative: Huebner, Stefan Rolf

(57) **Abstract**

An attaching method of a protective film to be attached to a display surface of an electronic device is provided which comprises displaying, on a cover film provided on a surface of the protective film on an opposite side to a surface at which the protective film is attached to the display surface, a first positioning mark, acquiring a size of the display surface, rendering and displaying a second positioning mark corresponding to the first positioning mark in response to the size of the display surface on the display surface of the electronic device, and attaching the protective film on the display surface in a state in which the protective film is positioned on the display surface using the first and second positioning marks.

## Description

### Field of the Invention

This application relates to an attaching method of a protective film to be attached to a display surface of an electronic device wherein an image is displayed on the display surface by a display part, a positioning system for a protective film, a protective film complex and a fabrication method for a protective film.

### Background of the Invention

In an electronic device such as a smart phone or a tablet includes a display surface where an image is displayed. The display surface is made of a transparent material that has a fixed strength and hardness, such as glass. The display surface is typically susceptible to scratch, and wear marks. Also it may cause undesired reflections. Hence, to protect a display surface from the scratch and also to suppress the undesired reflection, a film called a protective film is attached to this display surface. A protective film is not a part of the display of an electronic device and must be manufactured and attached separately.

An electronic device and its display surface have a predetermined shape for every type and every model. Additionally, an electronic device may include a notch for an operation button, a microphone, or speakers on the display surface. The positions of these operation buttons may also differ for every model type. Therefore, typically a protective film is manufactured separately in a predetermined shape according to the model and the type of an electronic device. A user of the electronic device has to manually position and then attach a protective film according the shape of the display surface at the time of electronic device use or replacement of a protective film. However, to precisely position and attach a protective film according to an electronic device and the shape of the display surface requires time and effort. In order to simplify the task, a protective film positioning system that can guide the user during manual application of the protective film to the display surface is desired.

### Summary of the Invention

According to one embodiment of the present disclosure, there is provided an attaching method of a protective film to be attached to a display surface of an electronic device wherein an image is displayed on the display surface by a display part. This attaching method comprises displaying, on a cover film provided on a surface of the protective film on an opposite side to a surface at which the protective film is attached to the display surface, a first positioning mark, acquiring a size of the display surface, rendering and displaying a second positioning mark corresponding to the first positioning mark in response to the size of the display surface on the display surface of the electronic device, and attaching the protective film on the display surface in a state in which the protective film is positioned on the display surface using the first and second positioning marks.

In one embodiment, a size of the display surface is acquired, a second positioning mark corresponding to the first positioning mark is rendered and displayed in response to the size of the display surface on the display surface of the electronic device, and the protective film on the display surface is attached in a state in which the protective film is positioned on the display surface using the first and second positioning marks. Consequently, when the second positioning mark is displayed on the display surface of the electronic device by the display part, it is highly possible to be displayed the second positioning mark in a desired size.

According to another embodiment of the present disclosure, there is provided a positioning system for a protective film to be attached to a display surface of an electronic device wherein an image is displayed on the display surface by a display part. In this positioning system, a first positioning mark is displayed on a cover film provided on a surface of the protective film on an opposite side to a surface at which the protective film is attached to the display surface, and a second positioning mark corresponding to the first positioning mark is rendered and displayed in response to a size of the display surface on the display surface of the electronic device.

The second positioning mark may include a line segment, and the line segment is preferably rendered substantially at a center of a length of a major side or a minor side of the display surface. Alternatively, the first positioning mark is preferably configured by forming a marking film, which is provided on a surface of the cover film on an opposite side to the surface at which the cover film is attached to the protective film, in a predetermined shape. Moreover, the marking film is preferably made of a semi-transparent material.

The second positioning mark may include a plurality of line segments, and the first positioning mark may include a plurality of protrusion formed in such a manner that vertexes thereof overlap with the line segments. Alternatively, the first positioning mark may configure part of a predetermined graphic and the second positioning mark may configure remaining parts of the graphic.

According to another embodiment of the present disclosure, there is provided an attaching method of a protective film to be attached to a display surface of an electronic device wherein an image is displayed on the display surface by a display part. This attaching method comprises displaying, on a cover film provided on a surface of the protective film on an opposite side to a surface at which the protective film is attached to the display surface, a first positioning mark, displaying, on the display surface of the electronic device, a positioning image on which a second positioning mark corresponding to the first positioning mark is formed and which has an aspect ratio substantially equal to an aspect ratio of the display part, and attaching the protective film on the display surface in a state in which the protective film is positioned on the display surface using the first and second positioning marks.

According to another embodiment of the present disclosure, there is provided a positioning system for a protective film to be attached to a display surface of an electronic device wherein an image is displayed on the display surface by a display part. In this positioning system, a first positioning mark is displayed on a cover film provided on a surface of the protective film on an opposite side to a surface at which the protective film is attached to the display surface, and a second positioning mark corresponding to the first positioning mark is formed on the display surface of the electronic device and a positioning image having an aspect ratio substantially equal to an aspect ratio of the display part is displayed on the display surface of the electronic device.

The positioning image may have a resolution substantially equal to a resolution of the display part.

According to another embodiment of the present disclosure, there is provided a protective film complex for use with the positioning system for a protective film comprising a protective film attached to a display surface of an electronic device on which an image is displayed, a cover film provided on a surface of the protective film on an opposite side to a surface at which the protective film is attached to the display surface; and a marking film provided on a surface of the cover film on an opposite side to the surface at which the cover film is attached to the protective film, and the marking film being formed in a shape of a first positioning mark, and the marking film is made of a semi-transparent material.

According to another embodiment of the present disclosure, there is provided a fabrication method for a protective film complex. The fabrication method comprises disposing a cover film on a surface of a protective film, which is attached to a display surface of an electronic device on which an image is displayed, on an opposite side to a surface at which the protective film is attached to the display surface, disposing a marking film on a surface of the cover film on an opposite side to the surface at which the cover film is attached to the protective film, and punching out the marking film into a shape of a first positioning mark and punching out the protective film and the cover film into a predetermined shape.

According to the present disclosure, a size of the display surface is acquired, a second positioning mark corresponding to the first positioning mark is rendered and displayed in response to the size of the display surface on the display surface of the electronic device, and the protective film on the display surface is attached in a state in which the protective film is positioned on the display surface using the first and second positioning marks. Consequently, when the second positioning mark is displayed on the display surface of the electronic device by the display part, it is highly possible to be displayed the second positioning mark in a desired size. Consequently, an attaching method of a protective film, a positioning system for a protective film, a protective film complex and a fabrication method for a protective film which enable to more easily and more precisely position and attach a protective film to be attached to a display surface of an electronic device.

### Brief Description of the Drawings

A more complete appreciation of this disclosure and many of the attendant advantages thereof will be readily obtained as the same becomes better understood by reference to the following detailed description when considered in connection with the accompanying drawings, wherein:
FIG. 1 depicts a perspective view of the structure of an exemplary a protective film complex.
FIG. 2 depicts a side view of the structure of an exemplary protective film complex.
FIG. 3 depicts a plan view of an exemplary marking film and a secondary marking, which appears on a display surface of an electronic device while attaching a protective film.
FIG. 4 demonstrates an example of the manufacturing method used to manufacture an exemplary protective film complex.
FIG. 5 depicts an exemplary method of attaching a protective film to a display surface of an electronic device.
FIG. 6 depicts a side view of a protective film complex and an electronic device for demonstrating an exemplary method of attaching a protective film.
FIG. 7 illustrates a flowchart of a drawing procedure of a secondary positioning mark to be shown on the display screen of an electronic device.
FIG. 8 is a block diagram showing an exemplary schematic structure an exemplary positioning system implemented using computer and networks.
FIG. 9 is a block diagram of the structure of an exemplary electronic device
FIG. 10 depicts a plan view of an exemplary marking film with an exemplary rhombus shaped mark.
FIG. 11A depicts a plan view of an exemplary secondary positioning mark where "NG" is formed in a negative form.
FIG. 11B depicts a plan view of an exemplary marking film where "NG" is formed in a positive form
FIG. 11C depicts a plan view of a precisely positioned protective film over the display surface.
FIG. 11D depicts a plan view of an imprecisely positioned protective film over the display surface.
FIG. 12A depicts a plan view of an exemplary secondary positioning mark formed with four outward lines from the center.
FIG. 12B depicts a plan view of an exemplary marking film formed as a cross shape at the center.
FIG. 12C depicts a plan view of a precisely positioned protective film over the display surface.
FIG. 12D depicts a plan view of an imprecisely positioned protective film over the display surface.

### Detailed Description of a Preferred Embodiment

In the drawings, like reference numerals designate identical or corresponding parts throughout the several views. Further, as used herein, the words "a", "an" and the like generally carry a meaning of "one or more", unless stated otherwise. The drawings are generally drawn to scale unless specified otherwise or illustrating schematic structures or flowcharts.

Furthermore, the terms "approximately," "proximate," and similar terms generally refer to ranges that include the identified value within a margin of 20%, 10% or preferably 5%, and any values there between.

### (Embodiment 1)

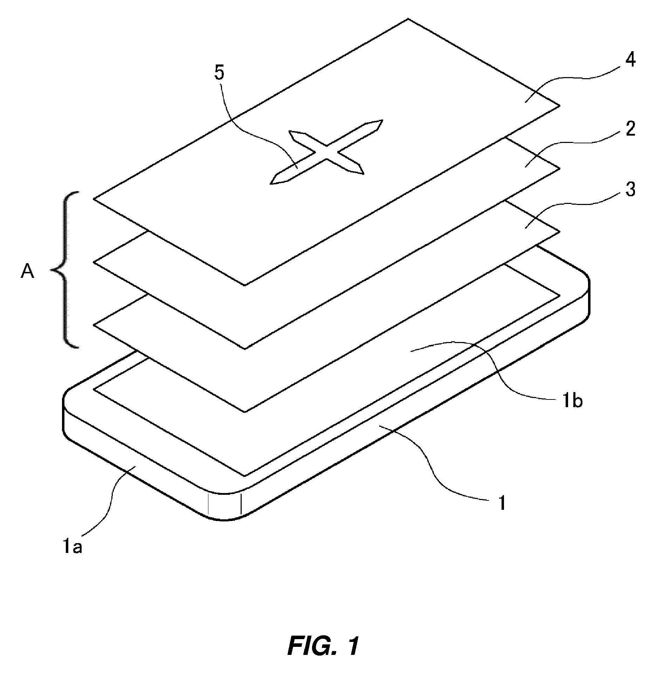

FIG. 1 presents a perspective view of an exemplary protective film complex for demonstrating different layers that can be attached on top of an exemplary electronic device 1. The electronic device 1, illustrated in the present embodiment, is an exemplary smart phone or a tablet. The electronic device 1 is equipped with a display part (indication omitted in FIG.1). The display part includes a display surface 1b on the top surface of the main body 1a of the electronic device 1. The display surface 1b is rectangular in shape and made of a transparent material such as a glass, a rigid plastic, etc. In addition, the electronic device 1 is equipped with a touchscreen (indication omitted in FIG. 1) which detects the touch position on the display surface 1b when a user touches this display surface 1b with fingers, stylus, etc. In order to protect the display surface 1b, a protective film complex is applied to the display surface 1b of the electronic device 1. The exemplary protective film complex A is composed of more than one films and bonding material. The protective film complex A includes a protective film 2, a peeling film 3, a cover film 4, and a marking film 5.

The protective film 2, the peeling film 3, and the cover film 4 conforms to the shape of the display surface. They are formed in the shape equal to or a slightly smaller than the outer edge of the display surface 1b of the electronic device 1.

The electronic device 1 may contain a display surface that includes notches for the operation buttons, a microphone, or speakers (omitted in FIG. 1). In such cases the protective film 2, the peeling film 3, and the cover film 4 are also provided with similar notches in the position corresponding to the notches on the display surface of the said electronic device.

The marking film 5 includes a certain shape marked for alignment or positioning purposes. In FIG. 1 the exemplary marking film 5 includes a cross shape where the vertical and the horizontal line segments are of a fixed line width and are crossed in the center as shown. The extreme edges of the cross shaped mark are triangular. The manufacturing and the use of the marking film 5 is discussed later in this embodiment.

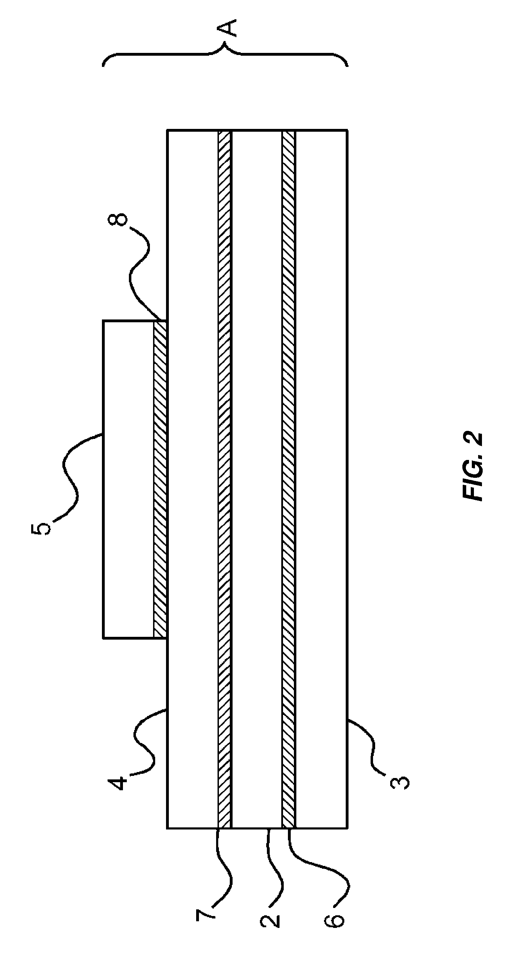

FIG. 2 provides a detailed construction of the exemplary protective film complex. The protective film complex A includes three contact bonding layers and four types of film. The first contact bonding layer 6 is used to removably attach a protective film 2 to the display surface 1b. The first contact bonding layer 6 is applied on one side of the protective film 2, the bottom side in this case, and covers the entire surface of the protective film 2. On one side of the first contact bonding layer 6, a peeling film 3 is removably attached for protecting the first contact bonding layer 6. Referring back to FIG. 1, the peeling film 3 and the first contact bonding layer 6 (not visible) are the one close to the display surface 1b.

In FIG. 2, a second contact bonding layer 7 is provided on the other side of the protective film 2 (i.e., the upper side in this example). The second contact bonding layer 7 covers the entire upper side of the protective film 2. On the other side of the second contact bonding layer 7 (i.e., the upper side in this case) a cover film 4 is removably attached for protecting the second contact bonding layer 7 and the top surface of the protective film 2.

On the other side of the cover film 4 (i.e., the upper side in this example) a marking film 5 is provided. A marking film 5 is used for the positioning at the time of attaching the protective film 2 to the display surface 1b of the electronic device 1. On one side of the marking film 5 a third contact bonding layer 8 is provided for removably attaching the marking film 5 to the cover film 4. The marking film 5 and the third contact bonding layer 8 may or may not cover the entire surface of the cover film 4.

Referring back to FIGS. 1 and 2, each element of the protective complex can be of different thickness and material. The thickness and the material may be determined based on more than one factors including the application process of the protective film. For example, some of the factors to consider include preventing a fingerprint impression, preventing the sticking of user's finger on the display surface 1b, improving the sliding of a user's finger, and improving appearance of the image displayed on the display surface 1b. During the process of application of the protective film 2 to the display surface 1b, the peeling film 3 is peeled off from the protective film 2. While peeling film 3, undesired electric charges may be developed on protective film 2. Therefore, antistatic material may be used for peeling film 3, to prevent the protective film 2 from getting electrically charged. Further, a process for improving the peeling ability of the peeling film 3 from the protective film 2 may be defined to the peeling film 3.

Considering the exemplary factors discussed above, in the embodiment of present disclosure a sample protective film complex is designed. For example, the protective film 2 is composed of 100-125-micrometer-thick polyethylene terephthalate (PET), the peeling film 3 is composed of 50-75-micrometer-thick PET, and the cover film 4 is composed of 50-75-micrometer-thick PET. Furthermore, the marking film 5 is composed of 65-75-micrometer-thick polyethylene. Moreover, the first contact bonding layer 6 is 50 micrometers in thickness, the second contact bonding layer 7 is 7 micrometers, the third contact bonding layer 8 is of 7 micrometers.

At the first contact bonding layer 6, after the protective film 2 is attached to the display surface 1b, a part of protective film 2 may be peeled off for instance to remove air bubbles and dust. Furthermore, it considers that the protective film 2 is reattached to the display surface 1b, hence a material with favorable re-peelability and adhesiveness is selected or a predetermined process may be defined to avoid the peeling of attached protective film 2.

Moreover, the marking film 5 used for positioning of the protective film 2 is eventually peeled off from the protective film 2 with the cover film 4. Therefore, the third contact bonding layer 8 may be omitted using the adhesiveness of polyethylene.

Typically, a user will be provided with the protective film complex A, wherein the protective films 2, the peeling film 3, the cover film 4, and the marking film 5 are provided in the state mutually fixed by the first, the second and the third contact bonding layers 6-8 as shown in FIG. 2.

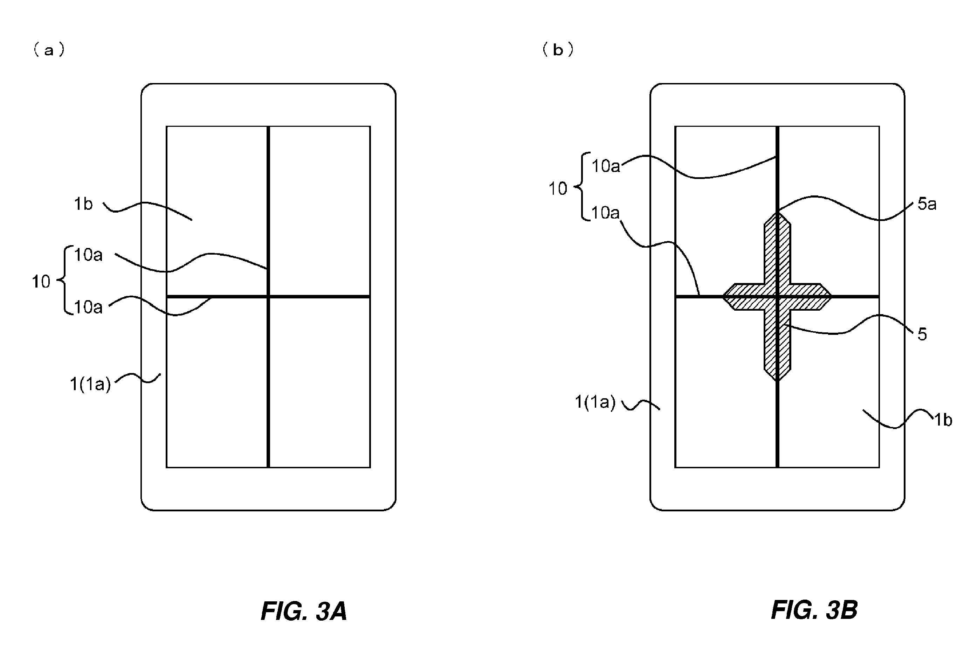

FIGS. 3A and 3B demonstrate exemplary markers that enable accurate positioning of the protective film complex A on the electronic device 1. In FIG. 3B, the marking film 5 includes a cross shaped marker (shaded region). The edges 5a of the cross shaped marker are triangular protrusions for manufacturing purposes. The marking film 5 acts as a first positioning mark used in the process of positioning the protective film 2 and attaching it to the display surface 1b. This marking film 5 is made of a semi-transparent material.

Referring to FIG.3A, the second positioning mark 10 corresponding to the shape of the marking film 5 is displayed on the display surface 1b of the electronic device 1. The exemplary second positioning mark 10, in the present embodiment of disclosure, is cross shaped, where the line segment 10a extends in the longitudinal direction and lateral direction of the display surface 1b of the electronic device 1. While creating the line segment 10a the screen size of the display surface 1b of the electronic device 1 is obtained. The positioning mark 10 is drawn and formed in the display surface 1b of the electronic device 1 according to this obtained screen size.

When the display surface 1b of the electronic device 1 is a rectangular shape, the screen size is determined from the length of the long side of this display surface 1b and a short side is obtained. The second positioning mark 10 is formed in the center of these long sides and short sides of the display surface 1b.

There are several methods of obtaining the screen size of the display surface 1b of the electronic device 1. For example, the pixel density represented by the resolution (pixel count of the long side x short side of the display surface 1b), dpi (dot per inch), etc. of the display surface 1b can be obtained, and the length of the long side and the short side of the display surface 1b can computed from these resolution and pixel density. The resolution and pixel density can be obtained as a field of a DisplayMetrics object, when operating system (OS) of the electronic device 1 is Android. Moreover, when OS of the electronic device 1 is iOS, the screen size of the display surface 1b of the electronic device 1 can be obtained by ppi (point per inch) and device pixel ratio (dpi).

Alternately, when OS of the electronic device 1 is iOS, and given that the screen size of the display surface 1b is defined by points. Then the line segment 10a can be drawn and formed in the position of the point corresponding to the center of these long side and short side of the display surface 1b. Moreover, when OS of the electronic device 1 is Android, the pixel (DIP: Density-independent Pixels) value independent of a pixel density is used. The line segment 10a may be drawn and formed in the position of points corresponding to the center of these long side and short side of the display surface 1b.

The second positioning mark 10 has thickness limitations in order to increase the positioning accuracy of the protective film 2, and to increase a user's visibility. For example, the line segments 10a can have a maximum thickness of several millimeters to a minimum of 0.1 mm.

In order to further increase the positioning accuracy, the center of the display screen 1b can be determined using the pixel count. The second positioning mark 10 are converted to the number of pixels on the display surface 1b of the electronic device 1 and if the number of pixels is an odd number with more than one dots, then the center pixel can be easily located in the center of the display surface 1b.

Screen-size acquisition operation of the display surface 1b of an electronic device 1 and drawing operation of the positioning mark 10 are performed by the application software 11, which may be stored in the memory part of the electronic device 1.

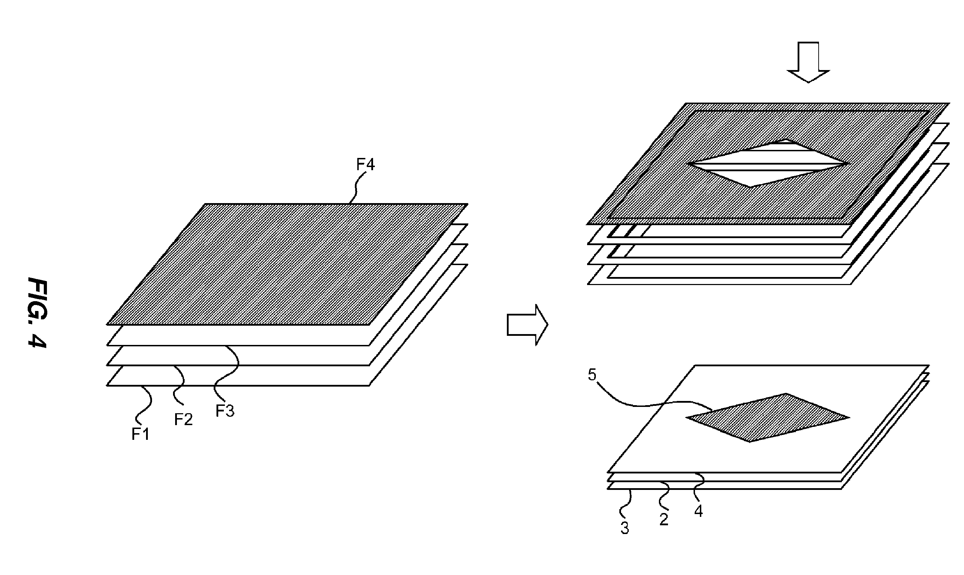

Referring to FIG. 4, an outline of manufacturing method of the protective film complex A is demonstrated. The films F1-F4 represent the protective film 2, the peeling film 3, the cover film 4, and the marking film 5 respectively. An adhesive agent is applied to the predetermined surface of the films F1-F4. Thus the first, the second, and the third contact bonding layers 6-8 are formed respectively. The manufacturing of the protective complex involves three roll body wounds of the chosen material that are fed into a cutter in a specific order. The process of feeding the roll body wound may be automatic, manual or a combination thereof.

A first roll body wound comprises the films F1 and F2 corresponding to the peeling film 3 and protective film 2 respectively. The films F1 and F2 are integrated by an adhesive forming the contact bonding layer 6 between films F1 and F2. A second roll body wound comprises the film F3, which corresponds to the cover film 4, and an adhesive forming the second contact bonding layer 7 formed on the film F3. A third roll body wound comprises the film F4, which corresponds to the marking film 5 and an adhesive forming the third contact bonding layer 8 on the film F4. These three roll body wounds are then supplied to a cutter.

The films F1-F4, supplied from the roll body wounds, are arranged in a particular order to form the protective film complex A just before entering a cutter or within a cutter. The cutter is configured to stamp out a desired shape of the marker film 5 from the film F4. The film F3 located at the bottom of the marker film 5 is not stamped out. The edge of the cutter is adjusted to a length of the grade which contacts the surface of the film F3 and a predetermined shape is stamped out. This cutting technique is popularly known as half cut technique and not discussed in detail in the embodiment of this disclosure. In order to achieve this half cut technique, adjustment of the blade edge length of a cutter is performed and a cover film 4 of certain thickness is chosen. So, even if the marking film 5 is stamped out with the blade of a cutter, it will not stamp out the cover film 4.

Notice that the edge part of the marking film 5 is formed in the triangle shaped protrusion 5a (refer FIG. 3B) in which the front end is sharpened in this embodiment. When peeling off films F4 other than marking film 5 cut after the half cutting step mentioned above from the protective film complex A, the film F4 is peeled off from an acute-angled part. Therefore the marking film 5 which should leave on the protective film complex A can be prevented from getting accidentally peeled off from the cover film 4. Alternately, the marking film 5 can be manufactured to cover adhesive bonding material only under the marking film shape, while the non-marking part of the film 4 does not contain adhesive bonding material. As such, only the marking film 5 will stick to the cover film 4 and the non-marking part of the film 4 can be peeled off leaving the marking film 5 attached to the cover film 4.

Alternate manufacturing method of the protective film complex A which can attain the simplification of a manufacturing process while maintaining the exact positioning between the marking film 5, the protective film 2, the peeling film 3, and the cover film 4 may be define. For example, the marking film 5 can be stamped out in one process. In another process, the protective film complex A of this embodiment is manufactured by positioning and sticking the protective film 2, the peeling film 3, and the cover film 4 in an integrated manner. Later, the marking film 5 may be attached to the integrated film. This process may be time consuming and may require additional efforts for raising the precision of positioning needed.

According to the manufacturing method of one embodiment, simplification of a manufacturing process of a protective film complex and by extension, speeding-up, raising the positioning accuracy of the marking film 5 etc. can be attained.

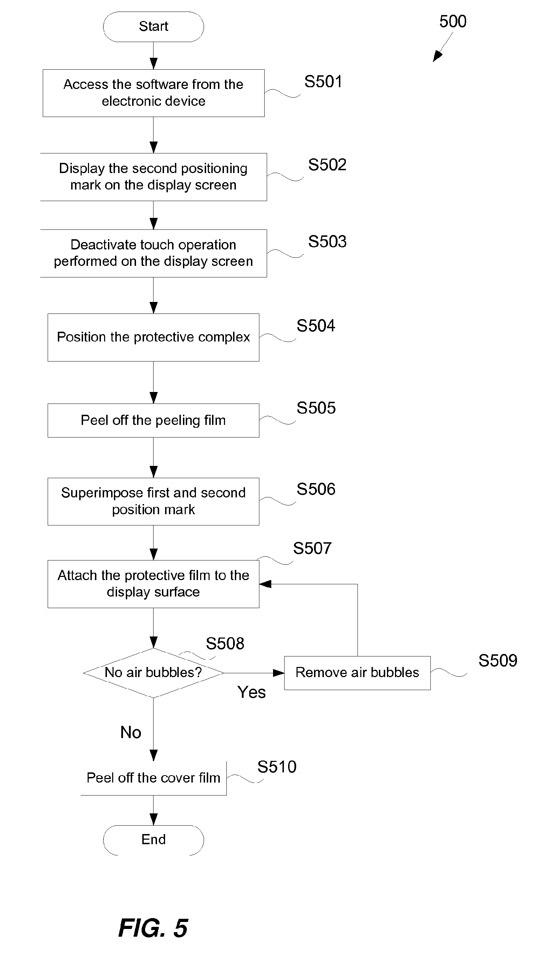

FIG. 5 illustrates an exemplary process of applying the protective film 2 to the display surface of an electronic device.

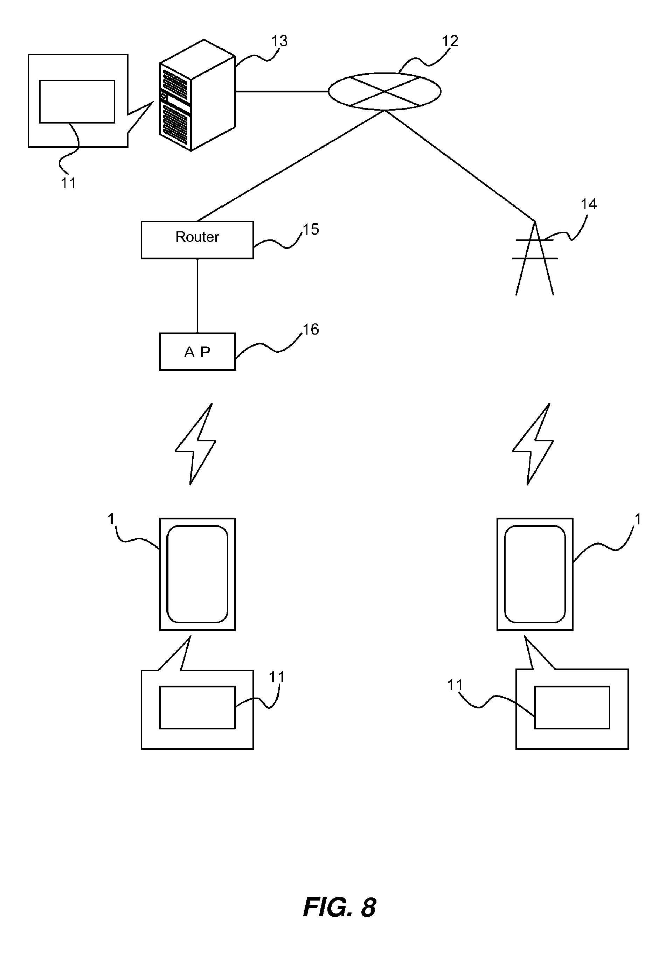

In the S501, application software implementing the secondary positioning mark is accessed from the electronic device on which the protective film must be applied. Various technologies can be used to access the application software. For example, referring to FIG. 8, the application software 11 can be stored in the external server 13 installed on Internet 12. Before attaching the protective film 2 to the display surface 1b of the electronic device 1, the electronic device 1 accesses this external server 13. When the electronic device 1 has a mobile communication function, the electronic device 1 can be connected via the mobile communication network 14. When the electronic device 1 has a wireless Local Area Network (LAN) function, the electronic device 1 can be connected via router 15 and access point (AP) 16. The application software may also be stored in the memory part of the electronic device 1. The method of accessing the software is not limited to any technology.

Further, there are several methods and technologies that allow access to the external server 13. For example, a character string called Uniform Resource Locator (URL) provides the information for accessing the storage location of the application software, which implements the positioning image data, on the external server 13. The URL information can also be displayed on a package of the protective film complex A. Alternately, the URL can be displayed on the instruction manual that demonstrates the attaching method of the protective film 2. It should be noted that the method of accessing and storing the URL is not limited to the technology discussed in the present embodiment.

Alternately, the URL to the application software can accessed using the Barcode technology such as QR Code. QR code can be displayed on a package mentioned above or the instruction manual. QR code is a coded image of an URL. The QR code can be accessed via a camera connected to the electronic device 1 and QR code reading software installed on the electronic device. The barcode, such as this QR Code, can be integrated on the marking film 5 as well. To integrate the barcode to the marking film 5, the manufacturing process mentioned above must be modified accordingly, for instance the marking film 5 and barcode must be formed simultaneously. Moreover, this barcode can be read in a production line and correspondence with the marking film 5 can be confirmed easily. It should be noted that the method of accessing and storing the barcode is not limited to the technology discussed in the present embodiment.

Another technology that can be used to store the information related to the accessing the software is called IC tags. For instance, a Near Field Communication (NFC) tag in which the information mentioned above can be stored and the tag can be installed on the protective film complex A. NFC tags can be accessed via the software that reads the IC tag.

Moreover, the method of storing the application software 11 in the memory part of the electronic device 1 is not limited to the method of obtaining it from the external server 13. Other storage methods may also be applied for this purpose. For example, external storage devices such as a memory card, a Hard Disk Drive (HDD), or solid state drives (SSD) may be used to store the application software 11. The external storage device can be connected to the electronic device 1 via different interfaces and application software 11 may be obtained from this external storage device.

In step S502, the second positing mark is shown on the display surface of the electronic device. For example, referring back to FIG. 3A, the second positioning mark 10 is shown on the display screen 1b of the electronic device 1 before attaching of the protective film complex. Any method can be used to display the second positioning mark 10 suitably.

In step S503, the touch screen inputs obtained from the display screen are deactivated. Thus, user activity such as zoom in, zoom out, rotation etc. are restricted while applying the protective complex A to the display screen. Hence, the second positing mark will not be moved, expanded, displayed in a reduced scale, rotated, etc. on the display surface 1b, if a touchscreen detects a touch position when a user touches the display surface 1b of the electronic device 1 accidently or purposefully when sticking the protective film 2.

The touch deactivation may be achieved in several ways in software. For instance, in the above mentioned application software 11, the drawing of the second positioning mark 10 and the command which cancels a user's touch operation (or a touch event) temporarily at the time of a display are executed. In this case, a touch operation on the entire display screen may be cancelled or an invalid touch area (part of a display screen) may be defined. It is sufficient if the touch operation corresponding to the display area superimposed on the marking film 5 is cancelled. For instance, referring back to FIGS. 3A and 3B, a second positioning mark 10 is displayed and the shaded image shows a touch operation invalid area where the touch operation will be cancelled. A partial touch operation deactivation may be required in an event where a touch operation need to be performed immediately or touch operation is needed to operate the electronic device 1 when the electronic device 1 has a reception (such as a call, a text message or an emergency) from the outside at the time of the protective film application process. Although, in this case, the touch operation is validated, the second positioning mark 10 should not be moved, expanded, reduce-displayed etc. in the display surface 1b.

Alternate methods of deactivating the touch operation are possible and not limited to the above discussion. For instance, the area under the marking film 5 can be structured and composed of material such that a touchscreen is not able to detect the touch operation within the marking area. For example, for a touchscreen of an electrostatic capacitance type, the thickness of the marking film 5 can be increased such that a touchscreen cannot detect the change of the electrostatic capacitance accompanying a touch operation. Alternately, an antistatic finish may be applied to the marking film 5 by coating a surfactant, a conductive resin, a metal powder, etc. on the upper surface of the marking film 5. Other antistatic material may also be used to manufacture the marking film 5.

For a touchscreen of a resistance film type, the thickness of the marking film 5 can be increased such that the pressure which acts on the marking film 5 by a touch operation is dispersed and a touchscreen cannot detect the pressure change.

In step S504, the protective film complex A is arranged above the display surface 1b of the electronic device 1. Then the peeling film 3 is peeled off from the protective film complex A, step S505. The protective film 2, in the embodiment of present disclosure, has an adhesive and can be attached to the display surface 1b. In step S506, the first and second positioning marks are superimposed. For example, referring back to FIG. 3B, the protrusion 5a front end of the marking film 5 and the line segment 10a of the second positioning mark 10 are aligned. As a result an exact positioning of the protective film 2 on the display surface 1b is possible. Notice that the protrusion 5a front end of the marking film 5 is triangular and aligns perfectly with the line segment 10a. Moreover, as mentioned earlier, the line segment 10a has a thinness of 0.1 mm - about several millimeters, therefore accurate positioning is attained. Further, in this embodiment, the marking film 5 is comprised from the semi-transparent material; hence the second positioning mark 10 on the display surface 1b can be visually recognized through the marking film 5 when the protective film complex A is arranged above the display surface 1b. Additionally, the protective film 2, the peeling film 3, and the cover film 4 are also comprised from a transparent material

Once the first and second positioning marks are aligned correctly relative to each other, the protective film is attached to the display surface, in step S507. Hence the protective film 2 is attached to the display surface 1b using the contact bonding layer 6. The cover film 4 and the marking film 5 remain integrated with the protective film 2. In step S508, if there are air bubbles, the protective film 2 may be partially peeled off to remove the air bubbles, step S509, and reattached to the display surface. If there are no air bubbles, the cover film is peeled off, in step S510. Thereby, the protective film 2 can be attached to the display surface 1b accurately.

When air bubbles are formed between the protective film 2 and the display surface 1b of the electronic device 1 (between the first contact bonding layer 6 and the display surface 1b), the visibility of the display surface 1b will be reduced. Moreover, the display appearance may worsen. Therefore when attaching the protective film 2 to the display surface 1b, it is preferable not to produce air bubbles between these protective films 2 and the display surface 1b. As an example of a method which does not produce air bubbles, the whole surface of the protective film 2 is not made to contact the display surface 1b simultaneously, but a part of protective film 2 is made to contact the display surface 1b first and then gradually increasing the contact area of the protective film 2. If the air bubbles are formed between the protective film 2 and the display surface 1b, the method of driving out these air bubbles on an edge can be followed.

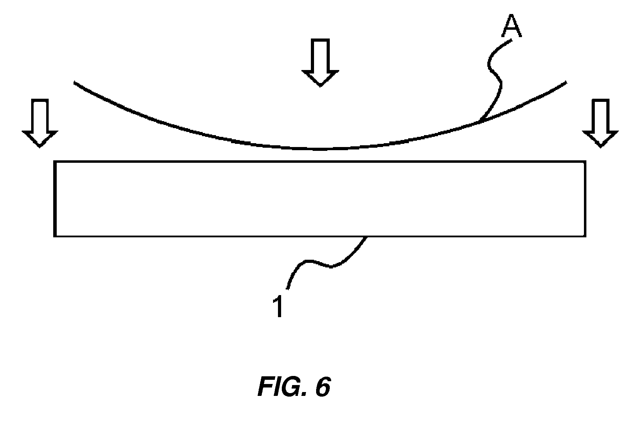

Referring to FIG. 6, a user holds the long side of both of protective film complexes A, and curves the center part toward the display surface 1b of the electronic device 1. Positioning of the protective film 2 and the display surface 1b is performed using the marking film 5 and the second positioning mark 10 as discussed earlier. Then center part of the protective film 2 is attached to the display surface 1b first followed by gradually increasing the contact area.

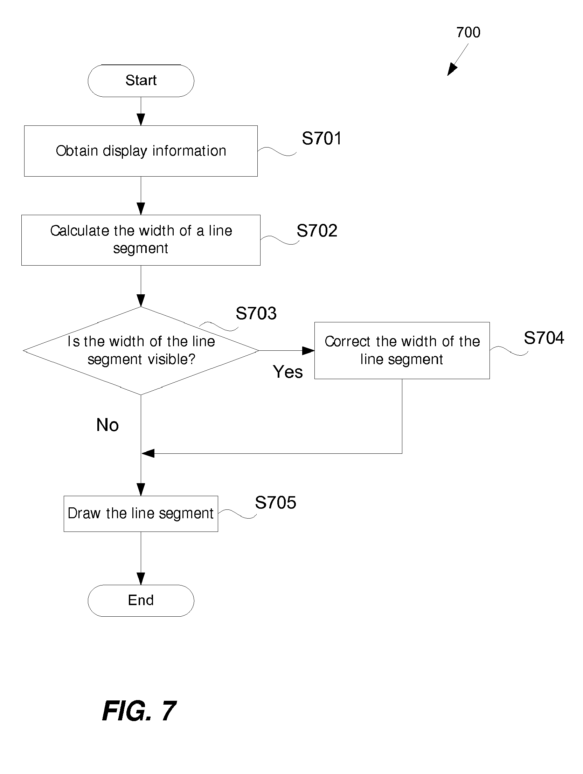

An exemplary drawing procedure for the display of the second positioning mark, discussed earlier in step S502, is illustrated in the flow chart of FIG. 7. The display process begins on execution of the application software 11. In step S701, a screen-size acquisition function obtains the information of the display surface 1b such as the screen size, the resolution and the pixel density of the display surface 1b of the display part 23 of the electronic device 1. An exemplary method of information acquisition was discussed earlier in this embodiment.

In step S702, a mark drawing function computes the width of the line segment 10a which defines the second positioning mark 10. For example, the width of the line segment 10a is set to 1 pixel. Further, in step S703, it is determined whether the width of the line segment 10a computed by step S702 can be visually recognize to a user. If the line segment 10a is not visually recognizable to a user then step S704 is performed. In step S704, the information of the display surface 1b obtained by step S701 is used to re-computes the width of the line segment 10a which a user can visually recognize. If the line segment 10a is visually recognizable to a user, then, in step S705, a mark drawing part draws and forms the second positioning mark 10 in a display part of the electronic device based on the information of the display part obtained by step S701. An exemplary drawing method and shape of the second positioning mark 10 was discussed earlier in this embodiment.

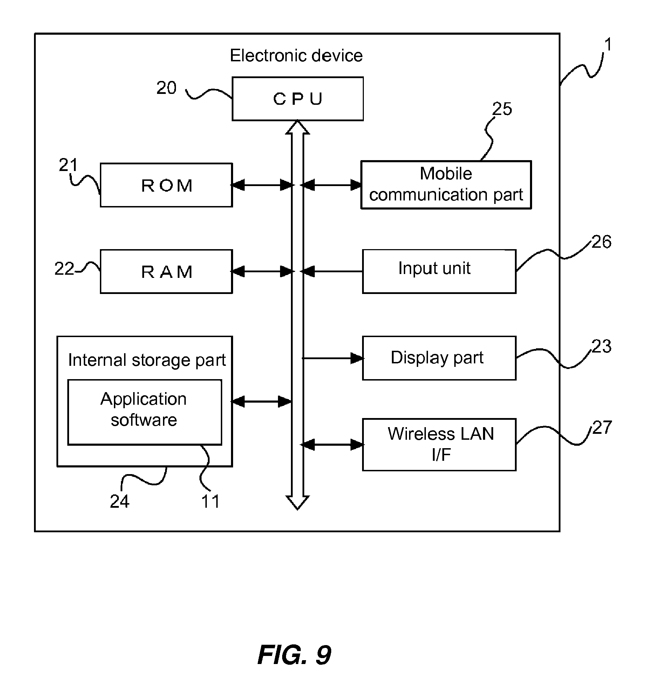

Although there is no special limitation in the structure of the electronic device 1 and the method of attaching the protective film to the display surface 1b of this embodiment, a sample implementation is demonstrated in FIG. 9.

FIG. 9 is an exemplary block diagram which shows schematic structure of an electronic device 1 that implements processes related to attaching the protective film of present embodiment. As illustrated, the electronic device 1 includes a Central Processing Unit (CPU) 20, a Read Only Memory (ROM) 21, a Random Access Memory (RAM) 22, a display part 23, an internal storage part 24, a mobile communication part 25, an input part 26, and a wireless LAN interface 27.

Further, the CPU 20, the ROM 21, the RAM 22, the display part 23, the internal storage part 24, the mobile communication part 25, the input part 26, and the wireless LAN interface 27 interconnected via one or more buses.

According to one embodiment, the CPU 20 loads a program stored in the internal storage part or ROM 21 into the RAM 22 via the input part 26, the interface 27 and the bus, and then executes a program configured to implement the present disclosure such as providing the functionality of the one or combination of the elements of the processes 500 and 700.

More than one program and various device specific setting data, firmware, etc. can be stored in ROM 21. RAM 22 works as a working memory of the electronic device 1, and various programs and data are stored in it temporarily.

The display part 23 is equipped with a liquid-crystal driver (all indication-omitted) which operates and controls a liquid crystal panel and the driver enables its functionality to be accessible via the electronic device 1. In the liquid crystal panel, the display surface 1b may be provided.

When the data related to a display screen are supplied to the liquid-crystal driver from CPU 20, a liquid-crystal driver will control the liquid crystal panel so that a desired screen may be displayed on the display surface 1b of a liquid crystal panel.

The internal storage part 24 works as a memory part of the electronic device 1 of this embodiment, and is equipped with an internal storage and an internal storage interface (indications omitted). An internal storage is a non-volatile semiconductor memory like a flash memory, HDD, SDD, etc. Application programs that are used in the electronic device 1 are stored in the internal storage part 24. For example the application software 11, which obtains the screen size of the display surface 1b of the electronic device 1, and draws and forms the second positioning mark 10 is stored in the internal storage part 24.

An internal storage interface operates and controls the internal storage, when a read-out/write-in command of the data is issued by the application program. In some cases, a non-volatile memory card like microSD, which can be install/removed, may be sufficient as an internal storage. In this case, an internal storage interface is further equipped with the memory card slot to mount the memory card.

The application software 11 is executed on CPU 20. Thereby, the CPU20 functions as: the screen-size acquisition part which obtains the screen size of the display surface 1b of the display part 23; mark drawing part which draws and forms the second positioning mark 10 in the display surface 1b according to the screen size of the display surface 1b.

The mobile communication part 25 performs mobile radio communication between the mobile communication networks 14 based on a communication specification such as the International Mobile Telecommunication (IMT)-2000 specification. In addition, the specification may contain at least one of 3G/HSDPA (3rd Generation/HighSpeed Downlink Packet Access), LTE (Long Term Evolution), WiMAX (Worldwide Interoperability for Microwave Access) corresponding to the mobile communication part 25.

The input part 26 is equipped with an input interface and a touchscreen. In this embodiment, a touchscreen is provided on the display surface 1b superimposed on a liquid crystal panel and the touchscreen has a size substantially similar to the display surface 1b of the liquid crystal panel. When surface of a touchscreen is touched by the user, the touchscreen detects the coordinate position of touch in a 2-dimensional space. This coordinate position is output through an interface.

The wireless LAN interface 27 can communicate with another wireless LAN apparatus and wireless communication devices, for example based on IEEE (The Institute of Electrical and Electronics Engineers, Inc.) 802.11 Standard. The wireless LAN interface 27 operates the electronic device 1 as a wireless LAN station, and performs wireless communications between other wireless LAN apparatuses in an infrastructure mode. The access point 16 is an example of another wireless LAN apparatus.

### (Embodiment 2)

In the above-mentioned 1st Embodiment, the application software 11 stored in the memory part (internal storage part 24) of the electronic device 1 drew and formed the 2nd positioning mark 10 in the display surface 1b.

The method of forming the 2nd positioning mark 10 in the display surface 1b however is not limited to the above-mentioned 1st Embodiment. For example, the positioning image data in which the second positioning mark 10 was formed can be prepared in advance. When the display part 23 displays this positioning image data, the second positioning mark 10 is visible on the display surface 1b.

The second positioning mark 10 can be formed in the positioning image data which has an aspect-ratio substantially similar to the aspect-ratio (for example, ratio of the long side of the display surface 1b, and a short side) of the display part of the electronic device 1. Further, the positioning image data has the resolution substantially similar to the resolution of the display part of the electronic device 1. Moreover, if the application software for image displays of the electronic device 1 presents this positioning image data as it is, then the second positioning mark 10 will not be moved, expanded, reduce-displayed by detection operation of a touchscreen in the display surface 1b. For example, when OS of the electronic device 1 is Android, the attributes of scaleType such as fitStart, fitCenter, or fitEnd in the ImageView class for an image display are regularly used in the application software for image displays, adjustments, etc. If the aspect-ratio of positioning image data is substantially similar to the aspect-ratio of the display surface 1b, the whole positioning image data will be displayed on the whole display surface 1b, then the second positioning mark 10 will be displayed on the display surface 1b of the electronic device 1 at the desired size without the need of any image manipulation.

Further, any image format can be applied for the positioning image data. For example, a BMP (Microsoft Windows Bitmap Image) format, a JPEG (Joint Photographic Experts Group) format, a GIF (Graphic Interchange Format) format etc. There is no special limitation on the format. Moreover, the artificial animation effect can be obtained by displaying dynamic image data, such as a MPEG (Moving Picture Experts Group) format, or some images one by one for every definite period of time such as a group of still image data like the animation GIF can be used.

The positioning image data in which a second positioning mark 10 was formed are stored in a similar manner as in the 1st Embodiment mentioned. For example, positioning image data stored in the external server 13 installed on Internet 12.

Before attaching the protective film 2 to the display surface 1b of the electronic device 1, the electronic device 1 accesses this external server 13. When the electronic device 1 has a mobile communication function, the electronic device 1 can be connected via the mobile communication network 14. When the electronic device 1 has a wireless LAN function, the electronic device 1 can be connected via router 15 and access point (AP) 16. The application software may also be stored in the memory part of the electronic device 1. The method of accessing the software is not limited to any technology.

Further, there are several methods and technologies that allow access to the external server 13. For example, a character string called URL provides the information for accessing the storage location of the application software, which implements the positioning image data, on the external server 13. The URL information can be displayed on a package of the protective film complex A. Alternately, the URL can be displayed on the instruction manual that demonstrates the attaching method of the protective film 2. It should be noted that the method of accessing and storing the URL is not limited to the technology discussed in the present embodiment.

Alternately, the URL to the application software can accessed using the Barcode technology such as QR Code. QR code can be displayed on a package mentioned above or the instruction manual. QR code is a coded image of an URL. The QR code can be accessed via a camera connected to the electronic device 1 and QR code reading software installed on the electronic device. The barcode, such as this QR Code, may be also be integrated on the marking film 5. To integrate the barcode to the marking film 5, the manufacturing process mentioned above must be modified accordingly, for instance the marking film 5 and barcode must be formed simultaneously. Moreover, this barcode can be read in a production line and correspondence with the marking film 5 can be confirmed easily. It should be noted that the method of accessing and storing the barcode is not limited to the technology discussed in the present embodiment.

Another technology that can be used to store the information related to the accessing the software is called IC tags. For instance, a NFC tag in which the information mentioned above can be stored and the tag can be installed on the protective film complex A. NFC tags can be accessed via the software that reads the IC tag.

Moreover, the method of storing the application software 11 in the memory part of the electronic device 1 is not limited to the method of obtaining it from the external server 13. Other storage methods may also be applied for this purpose. For example, external storage devices such as a memory card, a Hard Disk Drive (HDD), or solid state drives (SSD) may be used to store the application software 11. The external storage device can be connected to the electronic device 1 via different interfaces and application software 11 may be obtained from this external storage device.

Other alternatives include providing a printed positioning image on a film, a base sheet, etc. and enclose it in the package of the protective film complex A. Positioning image data may be printed on the package of the protective film complex A itself as well.

The printed positioning image data can be transferred to the electronic device 1 with the camera of the electronic device 1 followed by executing an application software to perform image correction (a trapezoid correction, a size change, a negative / positive inversion, etc.).

The corrected positioning image data is displayed on the display part of the electronic device 1 when attaching the protective film 2. The process of attaching the protective film is the similar to process 500 except for the difference in the procedure followed in the display step S502.

The method of attaching the protective film and the manufacturing of the protective film for a display surface of an electronic device is not limited to the above embodiments. Various modifications of the protective film and the method are possible.

In the present embodiment an exemplary electronic device with a touchscreen display was used, however it is possible to apply the protective film to an electronic device which is not equipped with touch devices, such as a touchscreen. In case of electronic devices with no touchscreens, the touch deactivation step S503 of process S501 is not necessary and can be eliminated completely. Further, the method of attaching the protective film can also be applied to electronic devices that are not equipped with the mobile communication part 25, the wireless LAN interface 27, etc.

One embodiment may include a display surface of an electronic device that is not flat surface, for example a curved display surface. The method of attaching the protective film in the present embodiment is also applicable to non-flat surfaces like a curved surface.

A curved display surface may exist in more than one configuration. For example, a liquid crystal panel which comprises the display part 23 of the electronic device 1 is curved. Alternately, a liquid crystal panel can be a flat surface, but the cover panel may be curved on the upper surface of the liquid crystal panel.

When attaching the protective film 2 to an electronic device whose display surface is curved, the protective film should first contact the display surface at the center part and gradually increase the contact area. This is attaching technique is discussed in the embodiment of the disclosure.

In one embodiment, a display surface with a small curvature of the center part and a large curvature of a peripheral part is used in many cases for a better visibility or operability. When attaching the protective film, the peripheral part of the display surface is the first contact area. It is desired to position the protective film in the location where a curvature is large in order to reducing the air bubble formation.

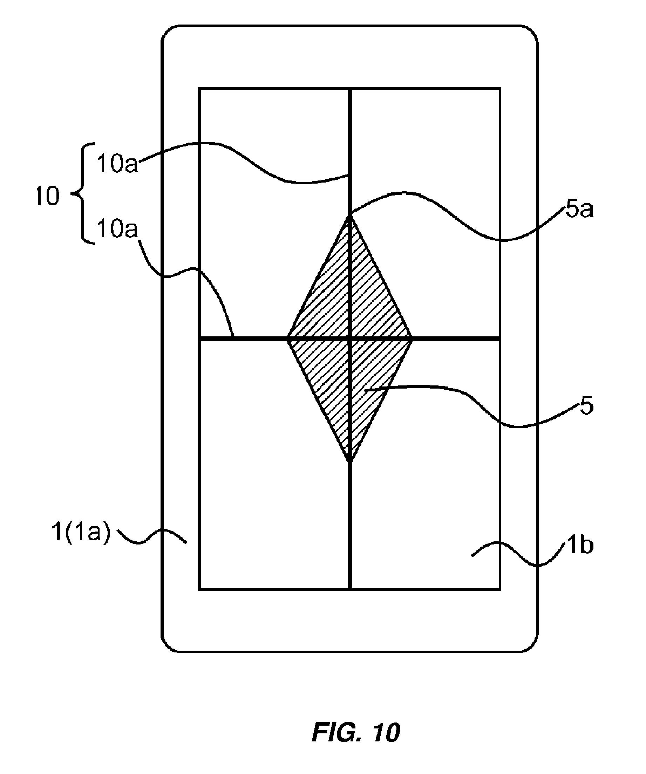

The shape of the marking film 5 is not limited to the cross shape with a sharp protrusion 5a at the front end. Any appropriate shape can be selected corresponding to the shape of the second positioning mark. For example, referring FIG. 10, the marking film 5 may be formed in the rhombus form which has the protrusion 5a in which the front end is sharpened. Further, the marking film may be formed of a character, a logo, a pattern, etc. For instance, a character or a logo of the manufacturer of the electronic device may be formed. Moreover, a user can confirm the front and the back of a protective film easily. Typically the guide label for front and back confirmation of a protective film is omitted.

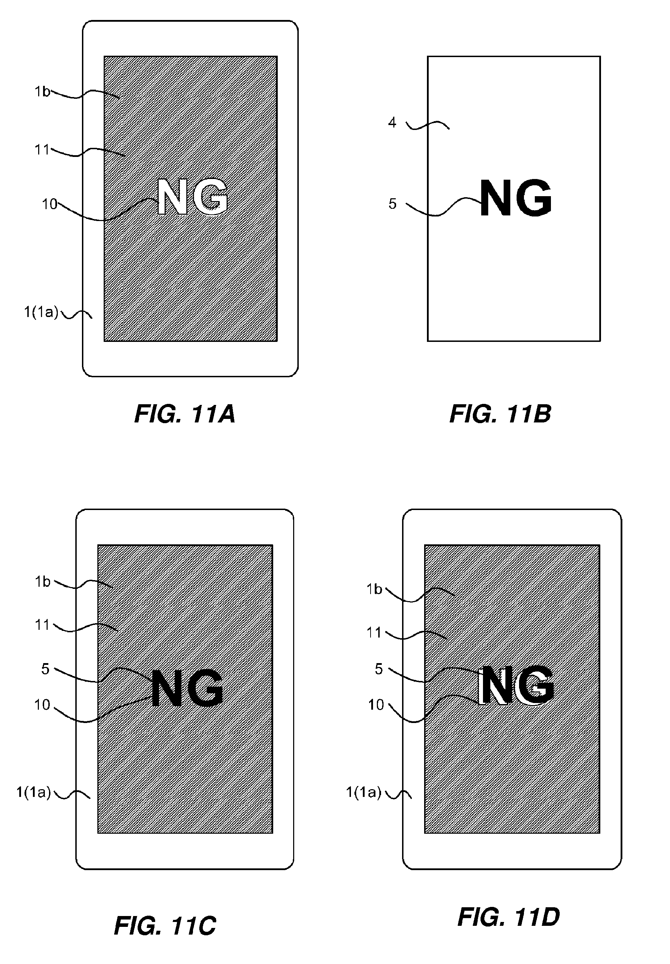

A combination of the first and the second positioning marks can manufactured so as to display a specific figure, an image, a character, a logo, etc. when the two positioning marks are superimposed. For example, referring to FIGS. 11A and 11B, the marking film 5 and the second positioning mark 10 forms a negative and a positive relationship respectively. In FIG.11B, the marking film 5 is formed in a shape which displays the predetermined character string "NG" in a positive format, while the second positioning mark 10 is formed in a shape which displays the same character string "NG" but in a negative format, in FIG. 11A. In FIG. 11A, the shaded area corresponds to a dark or black background on the display surface.

FIG. 11C illustrates the effect when the protective film is precisely positioned on the display surface 1b using the marking films 5 and the second positioning mark 10. The character string is seen as a unit, thus indicating a precise application of the protective film on the display screen. FIG. 11D, on the other hand, illustrates the effect when positioning with the protective film and the display surface is not precise. A distorted character string image remains, thus indicating an imprecise application of the protective film.

When manufacturing the protective film complex using a half cut technique, it is preferable to form the marking film 5 in a positive format for ease of peeling off the film F4. The film F4 can be peeled off easily by machine operation in case of a positive format of marking film 5. In case of a negative format the marking area must be peeled while the remaining film F4 remains intact. Peeling off the marking area may require manual effort especially when the shape is complex.

Alternately, the marking film 5 and the second positioning mark 10 can be shaped in a monochrome checkerboard pattern (checkered pattern) or hash pattern. When the protective film is positioned precisely on the display surface the entire surface may be displayed black.

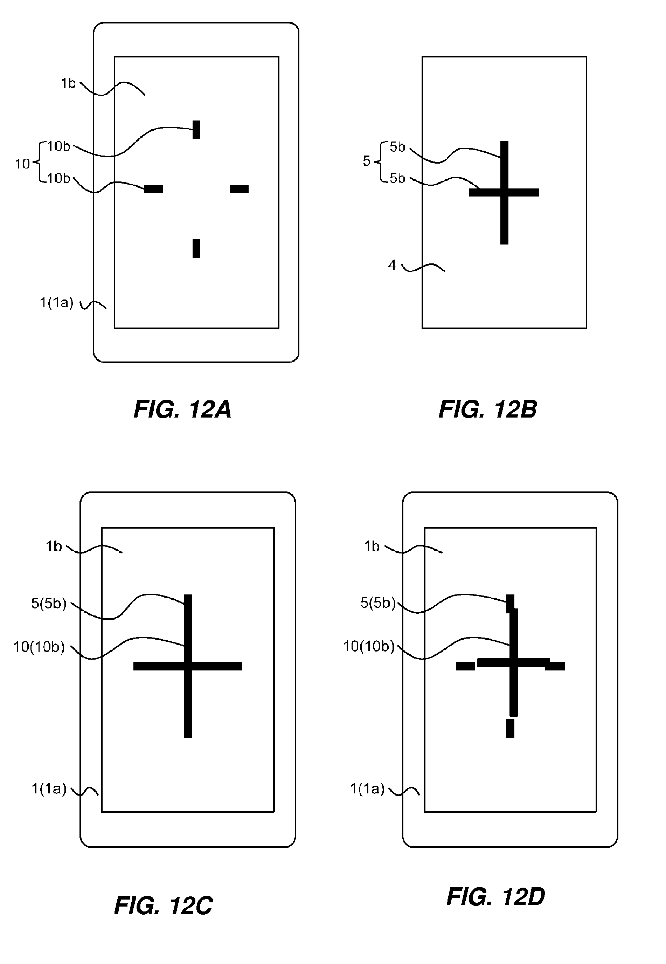

Alternately, referring to FIGS. 12A and 12B, the marking film 5 and the second positioning mark 10 may form one figure. In the example shown in FIG. 12B, the marking film 5 is formed in cross shape represented by line segments 5b, at the center of a film. In FIG. 12A, the second positioning mark 10 is formed by the four line segments 10b that extend outward from the center. When the protective film 2 and the display surface 1b are positioned precisely, a non-distorted integral image is formed, see FIG. 12C. On the other hand, if positioned imprecisely, a distorted image is formed, see FIG.12D.

## Claims

1. An attaching method of a protective film to be attached to a display surface of an electronic device wherein an image is displayed on the display surface by a display part, comprising:
displaying, on a cover film provided on a surface of the protective film on an opposite side to a surface at which the protective film is attached to the display surface, a first positioning mark;
acquiring a size of the display surface, rendering and displaying a second positioning mark corresponding to the first positioning mark in response to the size of the display surface on the display surface of the electronic device; and
attaching the protective film on the display surface in a state in which the protective film is positioned on the display surface using the first and second positioning marks.

2. A positioning system for a protective film to be attached to a display surface of an electronic device wherein an image is displayed on the display surface by a display part,
wherein a first positioning mark is displayed on a cover film provided on a surface of the protective film on an opposite side to a surface at which the protective film is attached to the display surface; and
a second positioning mark corresponding to the first positioning mark is rendered and displayed in response to a size of the display surface on the display surface of the electronic device.

3. The positioning system for a protective film according to claim 2,
wherein the second positioning mark includes a line segment, and the line segment is rendered substantially at a center of a length of a major side or a minor side of the display surface.

4. The positioning system for a protective film according to claim 2 or 3,
wherein the first positioning mark is configured by forming a marking film, which is provided on a surface of the cover film on an opposite side to the surface at which the cover film is attached to the protective film, in a predetermined shape.

5. The positioning system for a protective film according to claim 4,
wherein the marking film is made of a semi-transparent material.

6. The positioning system for a protective film according to any one of claims 2 to 5,
wherein the second positioning mark includes a plurality of line segments, and
the first positioning mark includes a plurality of protrusion formed in such a manner that vertexes thereof overlap with the line segments.

7. The positioning system for a protective film according to any one of claims 2 to 5,
wherein the first positioning mark configures part of a predetermined graphic and the second positioning mark configures remaining parts of the graphic.

8. An attaching method of a protective film to be attached to a display surface of an electronic device wherein an image is displayed on the display surface by a display part, comprising:
displaying, on a cover film provided on a surface of the protective film on an opposite side to a surface at which the protective film is attached to the display surface, a first positioning mark;
displaying, on the display surface of the electronic device, a positioning image on which a second positioning mark corresponding to the first positioning mark is formed and which has an aspect ratio substantially equal to an aspect ratio of the display part; and
attaching the protective film on the display surface in a state in which the protective film is positioned on the display surface using the first and second positioning marks.

9. A positioning system for a protective film to be attached to a display surface of an electronic device wherein an image is displayed on the display surface by a display part,
wherein a first positioning mark is displayed on a cover film provided on a surface of the protective film on an opposite side to a surface at which the protective film is attached to the display surface; and
a second positioning mark corresponding to the first positioning mark is formed on the display surface of the electronic device and a positioning image having an aspect ratio substantially equal to an aspect ratio of the display part is displayed on the display surface of the electronic device.

10. The positioning system for a protective film according to claim 9,
wherein the positioning image has a resolution substantially equal to a resolution of the display part.

11. A protective film complex for use with the positioning system for a protective film according to claim 2 or 89, the protective film complex comprising:
a protective film attached to a display surface of an electronic device on which an image is displayed;
a cover film provided on a surface of the protective film on an opposite side to a surface at which the protective film is attached to the display surface; and
a marking film provided on a surface of the cover film on an opposite side to the surface at which the cover film is attached to the protective film, and the marking film being formed in a shape of a first positioning mark;
wherein the marking film is made of a semitransparent material.

12. A fabrication method for a protective film complex for use with the positioning system for a protective film according to claim 2 or 89, the fabrication method comprising:
disposing a cover film on a surface of a protective film, which is attached to a display surface of an electronic device on which an image is displayed, on an opposite side to a surface at which the protective film is attached to the display surface;
disposing a marking film on a surface of the cover film on an opposite side to the surface at which the cover film is attached to the protective film; and
punching out the marking film into a shape of a first positioning mark and punching out the protective film and the cover film into a predetermined shape.
